# EUROPÄISCHE PATENTSCHRIFT

(11) **EP 3 037 709 B1**
(45) Veröffentlichungstag und Bekanntmachung des Hinweises auf die Patenterteilung: **13.02.2019**
(21) Anmeldenummer: 15200741.5
(22) Anmeldetag: 17.12.2015
(51) Int. Cl.: F16L 33/207

(54) **SCHLAUCHBEFESTIGUNGSSYSTEM MIT EINEM SCHLAUCHSTUTZEN FÜR LADELUFTSYSTEM**
HOSE CONNECTION SYSTEM WITH A HOSE STEM FOR A CHARGED AIR SYSTEM
SYSTEME DE FIXATION D'UN RACCORD DE TUYAU POUR SYSTÈME D'AIR DE SURALIMENTATION

(30) Priorität: 23.12.2014 DE 102014119597
(43) Veröffentlichungstag der Anmeldung: 29.06.2016
(60) Teilanmeldung: 18194468.7
(73) Patentinhaber: VERITAS AG, 63571 Gelnhausen (DE)
(72) Erfinder: Kahn, Peter, 63526 Erlensee (DE); Weitzel, Kai, 63589 Linsengericht (DE); Hattaß, Dirk, 63584 Gründau (DE)
(74) Vertreter: Patentship Patentanwaltsgesellschaft mbH

(56) Entgegenhaltungen:
- EP-A1- 1 096 194
- WO-A1-2013/108679
- DE-A1-102011 105 075
- US-B2- 6 899 355

## Beschreibung

Die vorliegende Erfindung betrifft ein Schlauchbefestigungssystem mit einem Schlauchstutzen für Leitungen zum Transport von Fluiden, beispielsweise in einem Kraftfahrzeug.

Übliche Schlauchstutzen kommen beispielsweise bei Ladeluftsystemen in Kraftfahrzeugen mit einem Turbolader zum Einsatz. Die wesentliche Aufgabe eines Ladeluftsystems besteht darin, über einen an einem Schlauchstutzen angebrachten Ladeluftschlauch die druckerhöhte Luft vom Turbolader zur Saugseite des Motors eines Kraftfahrzeuges zu transportieren.

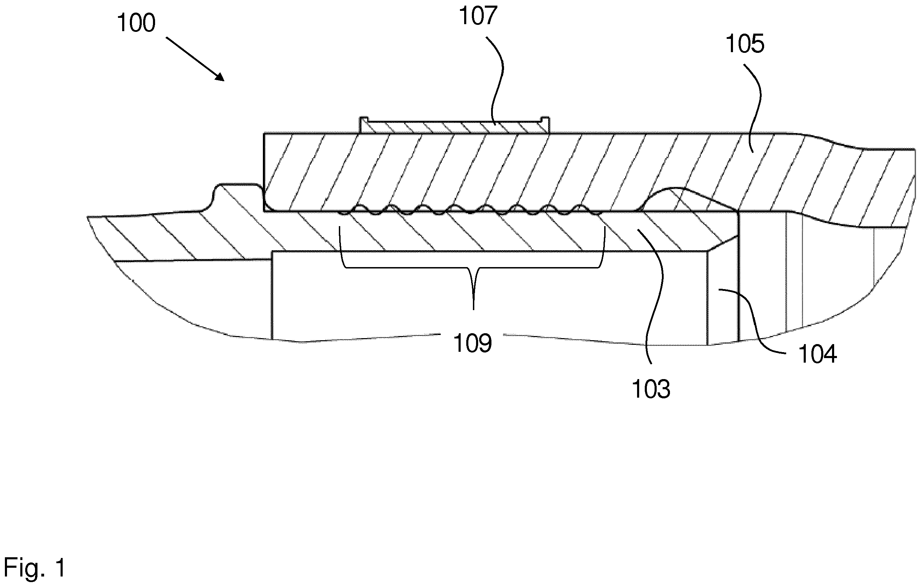

Figur 1 zeigt ein Schlauchbefestigungssystem 100, das einen Schlauchstutzen 103 mit einer Öffnung 104, einen Schlauch 105, der auf den Schlauchstutzen 103 aufgesteckt ist, und eine Befestigungsschelle 107 umfasst. Die Befestigungsschelle 107 dient dazu, das flexible Material des Schlauches 105 gegen die Außenseite des im Wesentlichen rohrförmigen Schlauchstutzens 103 zu drücken, um somit ein Abgleiten des Schlauches 105 vom Schlauchstutzen 103 zu verhindern. Zur Erhöhung der Haltekräfte ist auf der Außenseite des rohrförmigen Grundkörpers des Schlauchstutzens 103 ein Halteabschnitt 109 mit einer Vielzahl von identisch ausgestalteten Halterippen ausgebildet.

Aufgrund von im Betrieb auftretenden axialen Zugkräften, die beispielsweise durch Zugbelastungen, Relativbewegungen oder Betriebsdruckkräfte hervorgerufen werden, kann es bei dem vorstehend beschriebenen Schlauchstutzen leicht zu erhöhten Spannungs- oder Dehnungskräften und somit zu Beschädigungen an der Innenseite des Schlauches im Bereich des Halteabschnitts kommen. Insbesondere bei Schläuchen, die aus einem Material mit einer niedrigen Anrissfestigkeit bestehen, treten solche Beschädigungen in Form von Einrissen der Schlauchinnenseite auf.

In der WO 2013/108679 A1 ist ein Stutzen offenbart, auf den ein elastisch verformbarer Schlauch aufgesteckt ist, wobei der Schlauch durch ein Befestigungsband auf dem Stutzen fixiert ist.

In der US 6,899,355 A1 ist ein verbessertes Einpassen einer flexiblen Rohrspitze in ein flexibles Rohr offenbart.

In der DE 10 2011 105 075 A1 ist ein Schlauchnippel für eine Schlauchanordnung mit außenseitigen Halterippen offenbart.

In der EP 1 096 194 A1 ist ein Pressfitting für ein Rohr offenbart, wobei der Pressfitting eine Stützhülse aus Kunststoff aufweist.

Vor diesem Hintergrund ist es die der Erfindung zugrundeliegende Aufgabe, einen Schlauchstutzen anzugeben, der die Innenseite eines auf dem Schlauchstutzen aufgebrachten Schlauches weniger stark belastet.

Diese Aufgabe wird durch den Gegenstand des unabhängigen Anspruchs gelöst. Vorteilhafte Ausführungsformen der Erfindung sind Gegenstand der abhängigen Ansprüche sowie der Figuren und der Beschreibung.

Gemäß einem ersten Aspekt der Erfindung wird die Aufgabe durch einen Schlauchstutzen gelöst, auf den ein Schlauch aufsetzbar ist. Dabei umfasst der Schlauchstutzen eine Öffnung und einen Halteabschnitt zum Halten des Schlauches auf dem Schlauchstutzen. Der Halteabschnitt weist eine Mehrzahl von Halterippen auf, wobei eine erste Halterippe der Mehrzahl von Halterippen näher an der Öffnung angeordnet ist als die übrigen Halterippen der Mehrzahl von Halterippen, die eine zweite Halterippe umfassen, und wobei die erste Halterippe der Mehrzahl von Halterippen eine geringere Höhe als die zweite Halterippe der Mehrzahl von Halterippen aufweist. Dadurch wird beispielsweise der Vorteil erreicht, dass die Krafteinwirkung auf die Innenseite des Schlauches gegenüber bekannten Schlauchstutzen im Bereich des Halteabschnitts reduziert wird, ohne jedoch die Haltewirkung des Halteabschnitts zu beeinträchtigen.

In einer vorteilhaften Ausführungsform des Schlauchstutzens ist die Höhe der ersten Halterippe der Mehrzahl von Halterippen ungefähr halb so groß wie die Höhe der zweiten Halterippe der Mehrzahl von Halterippen. Erfindungsgemäß ist die zweite Halterippe die Halterippe der Mehrzahl von Halterippen, die relativ zu der Öffnung der ersten Halterippe der Mehrzahl von Halterippen unmittelbar nachgelagert ist, d.h. der ersten Halterippe der Mehrzahl von Halterippen am nächsten ist. Es hat sich gezeigt, dass sich bei dieser Ausführungsform ein besonders vorteilhafter Ausgleich zwischen der durch den Halteabschnitt bewirkten Haltewirkung und der Beanspruchung der Schlauchinnenseite durch den Halteabschnitt erreichen lässt.

Erfindungsgemäß weist wenigstens eine weitere Halterippe der Mehrzahl von Halterippen im Wesentlichen die gleiche Höhe wie die zweite Halterippe auf und ist relativ zu der Öffnung der zweiten Halterippe nachgelagert. Dadurch wird beispielsweise der Vorteil erreicht, dass in dem von der Öffnung aus gesehen hinteren Bereich des Halteabschnitts die Haltewirkung des Halteabschnitts stärker ausgeprägt ist, während in dem von der Öffnung aus gesehen vorderen Bereich des Halteabschnitts die Beanspruchung der Schlauchinnenseite durch den Halteabschnitt weniger stark ausgeprägt ist.

In einer weiteren vorteilhaften Ausführungsform des Schlauchstutzens weist der Schlauchstutzen zwischen dem Halteabschnitt und der Öffnung einen vorderen Flachabschnitt auf, d.h. einen Abschnitt ohne Halterippen. Dadurch wird beispielsweise der Vorteil erreicht, dass der Schlauch im Bereich des vorderen Flachabschnitts im Wesentlichen flach auf dem Schlauchstutzen aufliegt, um eine fluiddichte Abdichtung zwischen dem Schlauchstutzen und dem Schlauch auszubilden.

In einer weiteren vorteilhaften Ausführungsform des Schlauchstutzens ist der Schlauchstutzen im Wesentlichen axialsymmetrisch ausgebildet. Dadurch wird beispielsweise der Vorteil erreicht, dass sich der Schlauchstutzen sehr einfach herstellen lässt, beispielsweise als ein Kunststoffformteil oder ein Spritzgussformteil.

In einer weiteren vorteilhaften Ausführungsform des Schlauchstutzens sind die Halterippen durch um den Schlauchstutzen umlaufende Wülste gebildet, wobei die Wülste des Halteabschnitts insbesondere jeweils axialsymmetrisch auf dem Schlauchstutzen ausgebildet sind. Dadurch wird beispielsweise der Vorteil erreicht, dass sich ein Schlauchstutzen mit derart ausgestalteten Halterippen sehr einfach herstellen lässt, beispielsweise als ein Kunststoffformteil oder ein Spritzgussformteil.

In einer weiteren vorteilhaften Ausführungsform des Schlauchstutzens umfasst die Mehrzahl von Halterippen 3, 4, 5, 6, 7, 8, 9 oder 10 Halterippen.

In einer weiteren vorteilhaften Ausführungsform des Schlauchstutzens sind die Halterippen der Mehrzahl von Halterippen durch eine um den Schlauchstutzen umlaufende Gewindewulst gebildet.

In einer weiteren vorteilhaften Ausführungsform des Schlauchstutzens umfasst der Schlauchstutzen in der Nähe der Öffnung einen in Umfangsrichtung umlaufenden, radial abstehenden Vorsprung. Dadurch wird beispielsweise der Vorteil erreicht, dass beim Anbringen des Schlauches auf dem Schlauchstutzen eine Minimalkraft aufgebracht werden muss, um die Schlauchöffnung so weit zu dehnen, dass die Schlauchöffnung über den Vorsprung geschoben werden kann.

In einer weiteren vorteilhaften Ausführungsform des Schlauchstutzens umfasst der Schlauchstutzen einen in Umfangsrichtung umlaufenden Ringanschlag, der in axialer Richtung relativ zu der Öffnung dem Halteabschnitt nachgelagert ist und an dem der Schlauch anliegt, wenn der Schlauch auf dem Schlauchstutzen aufgesetzt ist. Dadurch wird beispielsweise der Vorteil erreicht, dass sich mittels des axialen Abstands zwischen dem Ringanschlag und dem Halteabschnitt bestimmen lässt, wo der Halteabschnitt die Innenseite des aufgebrachten Schlauches beaufschlägt.

In einer weiteren vorteilhaften Ausführungsform des Schlauchstutzens ist auf dem Schlauchstutzen zwischen dem Halteabschnitt und dem Ringanschlag ein hinterer Flachabschnitt ausgebildet, d.h. ein Abschnitt ohne Halterippen. Dadurch wird beispielsweise der Vorteil erreicht, dass der Schlauch im Bereich des hinteren Flachabschnitts im Wesentlichen flach auf dem Schlauchstutzen aufliegt, um eine fluiddichte Abdichtung zwischen dem Schlauchstutzen und dem Schlauch auszubilden.

Erfindungsgemäß wird ein Schlauchbefestigungssystem mit einem Schlauchstutzen gemäß dem ersten Aspekt der Erfindung, einem Schlauch und einer Befestigungsschelle zum Befestigen des Schlauchs an dem Schlauchstutzen bereitgestellt.

In einer vorteilhaften Ausführungsform des Schlauchbefestigungssystems ist der Halteabschnitt des Schlauchstutzens relativ zu der Befestigungsschelle in axialer Richtung derart dimensioniert, dass in axialer Richtung die erste Halterippe weiter entfernt von der Öffnung angeordnet ist als das der Öffnung zugewandte Ende der Befestigungsschelle.

In einer weiteren vorteilhaften Ausführungsform des Schlauchbefestigungssystems besteht der Schlauch aus einem flexiblen Material, so dass dann, wenn der Schlauch an dem Schlauchstutzen angebracht ist, sich das Material des Schlauches zumindest teilweise in Vertiefungen zwischen zwei jeweils benachbarten Halterippen der Mehrzahl von Halterippen ausdehnt.

Ausführungsbeispiele der Erfindung sind in den Zeichnungen dargestellt und werden im Folgenden näher beschrieben.

Es zeigen:
- Fig. 1: eine Querschnittsansicht eines Abschnitts eines Schlauchbefestigungssystems mit einem Schlauchstutzen gemäß dem Stand der Technik;
- Fig. 2: eine Querschnittsansicht eines Abschnitts einer Ausführungsform eines Schlauchbefestigungssystems mit einer Ausführungsform eines Schlauchstutzens; und
- Fig. 2a: eine Detailansicht der Querschnittsansicht von Figur 2.

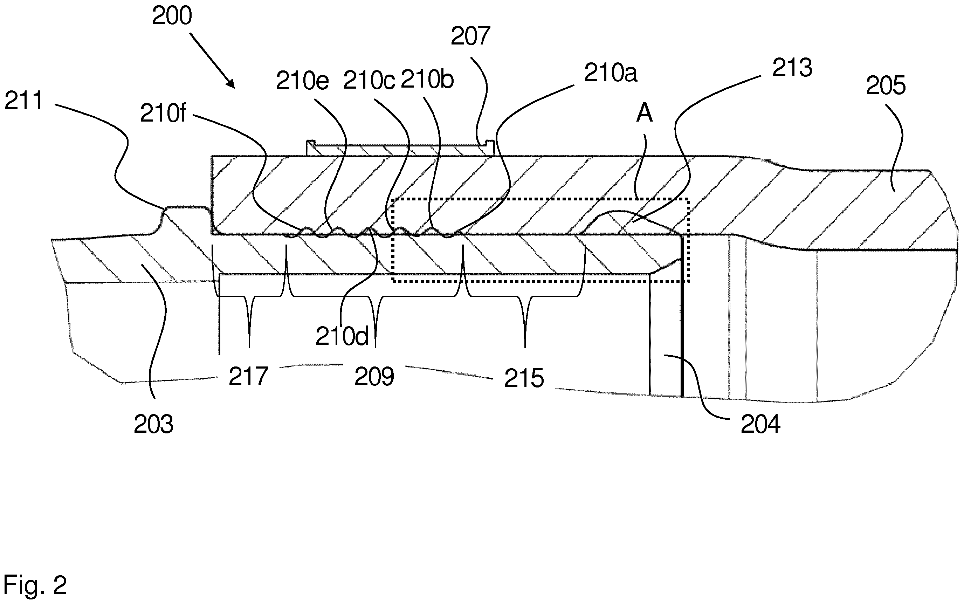

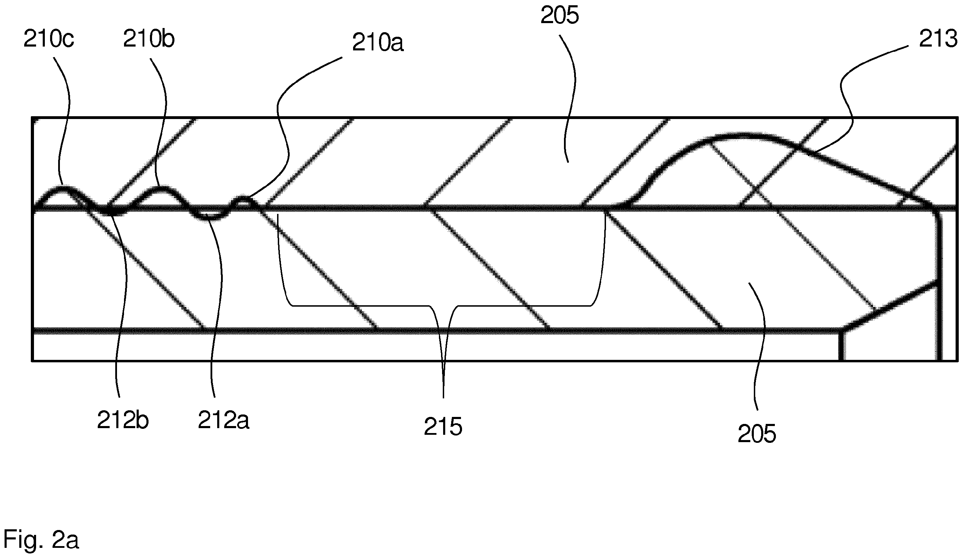

Figur 2 zeigt eine Querschnittsansicht eines Schlauchstutzens 203 in einem Schlauchbefestigungssystem 200. Das Schlauchbefestigungssystem 200 mit dem Schlauchstutzen 203 kann beispielsweise Teil eines Ladeluftsystems in einem Kraftfahrzeug sein.

Das Schlauchbefestigungssystem 200 umfasst neben dem Schlauchstutzen 203 einen Schlauch 205 und optional eine Befestigungsschelle 207. Der Schlauch 205 ist auf den Schlauchstutzen 203 aufgesteckt und wird mittels der Befestigungsschelle 207 auf dem Schlauchstutzen 203 befestigt.

Der Schlauchstutzen 203 weist einen im Wesentlichen rohrförmigen und axialsymmetrischen Grundkörper auf, der eine Öffnung 204 definiert. Bei dem Schlauchstutzen 203 kann es sich beispielsweise um ein Kunststoffformteil oder ein Spritzgussformteil handeln, das aus Polyamid PA, Polyphthalamid PPA oder Polyphenylensulfid PPS gebildet ist. Daneben kann der Schlauchstutzen 203 auch aus Metall gebildet sein.

Wie vorstehend bereits erwähnt, dient die Befestigungsschelle 207 zum Fixieren des Schlauches 205 auf dem Schlauchstutzen 203. Zu diesem Zweck wird die Befestigungsschelle 207 zusammengedrückt, so dass sich diese an den Schlauch 205 und somit an den Schlauchstutzen 203 anlegt. Die Befestigungsschelle 207 ist beispielweise eine Metallband- oder Stahlbandschelle, die beispielsweise als eine Schraubschelle, eine Federbandschelle oder eine Einohrschelle ausgebildet sein kann.

Auf der Außenseite des Schlauchstutzens 203 ist ein Halteabschnitt 209 zum Halten des Schlauches 205 auf dem Schlauchstutzen 203 ausgebildet. Der Halteabschnitt 209 umfasst mehrere radial abstehende und axial voneinander beabstandete Halterippen, beispielsweise, wie dargestellt, sechs Halterippen 210a-f.

In Figur 2a, bei der es sich um eine Detailansicht des in Figur 2 gekennzeichneten Ausschnitts A handelt, sind drei der Halterippen des Halteabschnitts 209, nämlich eine erste Halterippe, eine zweite Halterippe und eine dritte Halterippe beispielhaft als Halterippen 210a, 210b bzw. 210c bezeichnet. Dabei ist die erste Halterippe 210a zum einen in axialer Richtung näher an der Öffnung 204 angeordnet als die anderen Halterippen 210b-f des Halteabschnitts 209, beispielsweise als die zweite Halterippe 210b und die dritte Halterippe 210c. Zum anderen weist die erste Halterippe 201a in radialer Richtung eine geringere Höhe als die anderen Halterippen 210b-f des Halteabschnitts 209 auf, beispielsweise als die zweite Halterippe 210b und die dritte Halterippe 210c. Beispielsweise kann in radialer Richtung die Höhe der ersten Halterippe 210a ungefähr halb so groß wie die Höhe der zweiten Halterippe 210b sein. Die dritte Halterippe 210c und die weiteren Halterippen 210d-f des Halteabschnitts 209, die in axialer Richtung relativ zu der Öffnung 204 der ersten Halterippe 210a und der zweiten Halterippe 210b nachgelagert sind, können in radialer Richtung im Wesentlichen die gleiche Höhe wie die zweite Halterippe 210b aufweisen. Im Halteabschnitt 209 ist zwischen zwei benachbarten Halterippen jeweils eine Vertiefung ausgebildet. Beispielsweise ist zwischen der ersten Halterippe 210a und der zweiten Halterippe 210b eine Vertiefung 212a ausgebildet und zwischen der zweiten Halterippe 210b und der dritten Halterippe 210c eine Vertiefung 212b ausgebildet.

Die Halterippen 210a-f des Halteabschnitts 209 sind jeweils als eine um den Schlauchstutzen 203 umlaufende, radial abstehende Wulst ausgebildet. Ebenso können die Halterippen 210a-f des Halteabschnitts 209 als eine um den Schlauchstutzen 203 umlaufende Gewindewulst ausgebildet sein.

Zwischen der ersten Halterippe 210a des Halteabschnitts 209 und der Öffnung 204 weist der Schlauchstutzen 203 einen vorderen Flachabschnitt 215 auf, d.h. einen Abschnitt der keine Halterippen aufweist. Der vordere Flachabschnitt 215 kann eine axiale Ausdehnung aufweisen, die ungefähr gleich der axialen Ausdehnung des Halteabschnitts 209 ist. Der vordere Flachabschnitt 215 dient dazu, dass der Schlauch in diesem Bereich im Wesentlichen flach auf dem Schlauchstutzen 203 aufliegt, um eine fluiddichte Abdichtung zwischen dem Schlauchstutzen 203 und dem Schlauch 205 auszubilden.

Im Bereich der Öffnung 204 ist auf dem Schlauchstutzen 203 ein in Umfangsrichtung umlaufender, radial abstehender Vorsprung 213 ausgebildet. Der Vorsprung weist in radialer Richtung eine größere Höhe als die Halterippen 210a-f des Halteabschnitts 209 auf. Der Vorsprung 213 sorgt zum einen dafür, dass beim Anbringen eines Schlauches, beispielsweise des Schlauches 205, auf dem Schlauchstutzen 203 zunächst eine bestimmte Minimalkraft aufgebracht werden muss, um die Schlauchöffnung so weit zu dehnen, dass die Schlauchöffnung über den Vorsprung 213 geschoben werden kann. Zum anderen sorgt der Vorsprung 213 bei dem auf dem Schlauchstutzen 203 aufgebrachten Schlauch 205 dafür, dass gegenüber einer Ausgestaltung ohne einen solchen Vorsprung 213 die Kraft reduziert wird, die von der ersten Halterippe 210a auf die Innenseite des Schlauches 205 ausgeübt wird.

Zur Begrenzung der axialen Strecke, über die der Schlauch 205 auf den Schlauchstutzen 203 aufgebracht werden kann, umfasst der Schlauchstutzen 203 auf der der Öffnung 204 gegenüberliegenden Seite des Halteabschnitts 209 einen in Umfangsrichtung umlaufenden Ringanschlag 211. Wenn der Schlauch 205 vollständig auf den Schlauchstutzen 203 aufgebracht ist, liegt die Stirnseite des Endes des Schlauches 205 am Ringanschlag 211 an.

Zwischen dem Halteabschnitt 209 und dem Ringanschlag 211 ist auf dem Schlauchstutzen 203 ein hinterer Flachabschnitt 217 ausgebildet, d.h. ein Abschnitt der keine Halterippen aufweist. Der hintere Flachabschnitt 217 dient dazu, dass der Schlauch in diesem Bereich im Wesentlichen flach auf dem Schlauchstutzen 203 aufliegt, um eine fluiddichte Abdichtung zwischen dem Schlauchstutzen 203 und dem Schlauch 205 auszubilden.

Wie bereits vorstehend erwähnt, bilden der Schlauchstutzen 203, der Schlauch 205 und die Befestigungsschelle 207 ein Schlauchbefestigungssystem 200. Relativ zu der Größe und der Anordnung der Befestigungsschelle 207 ist der Halteabschnitt 209 des Schlauchstutzens 203 in axialer Richtung derart dimensioniert, dass in axialer Richtung die erste Halterippe 210a weiter entfernt von der Öffnung 204 angeordnet ist als das der Öffnung 204 zugewandte Ende der Befestigungsschelle 207.

Der Schlauch 205 umfasst ein flexibles Material, beispielsweise Silikon. Wenn der Schlauch 205 auf dem Schlauchstutzen 203 angebracht ist, dehnt sich das flexible Material des Schlauches 205 in die Vertiefung, beispielsweise in die Vertiefung 212a und in die Vertiefung 212b, zwischen zwei jeweils benachbarten Halterippen des Halteabschnitts 209 aus, so dass der Schlauch durch den Halteabschnitt 209 auf dem Schlauchstutzen gehalten wird. Auf der Innenseite des Schlauches 205 kann eine Innensperrschicht vorgesehen sein, beispielsweise eine Innensperrschicht aus Fluor-Kautschuk (FKM).

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Schlauchbefestigungssystem
- 103: Schlauchstutzen
- 104: Öffnung
- 105: Schlauch
- 107: Befestigungsschelle
- 109: Halteabschnitt
- 200: Schlauchbefestigungssystem
- 203: Schlauchstutzen
- 204: Öffnung
- 205: Schlauch
- 207: Befestigungsschelle
- 209: Halteabschnitt
- 210a-f: Halterippen
- 211: Ringanschlag
- 212a: Vertiefung
- 212b: Vertiefung
- 213: Vorsprung
- 215: vorderer Flachabschnitt
- 217: hinterer Flachabschnitt
- A: Ausschnitt

## Patentansprüche

1. Schlauchbefestigungssystem (200) mit einem Schlauchstutzen (203), einem Schlauch (205), wobei der Schlauch (205) auf dem Schlauchstutzen (203) aufsetzbar ist, und einer Befestigungsschelle (207) zum Befestigen des Schlauchs (205) auf dem Schlauchstutzen (203), wobei der Schlauchstutzen (203) umfasst:
eine Öffnung (204); und
einen Halteabschnitt (209) zum Halten des Schlauches (205) auf dem Schlauchstutzen (203), wobei der Halteabschnitt (209) eine Mehrzahl von Halterippen (210a-f) aufweist, wobei eine erste Halterippe (210a) der Mehrzahl von Halterippen (210a-f) näher an der Öffnung (204) angeordnet ist als die übrigen Halterippen (210b-f) der Mehrzahl von Halterippen (210a-f), die eine zweite Halterippe umfassen, und wobei die erste Halterippe (210a) der Mehrzahl von Halterippen (210a-f) eine geringere Höhe als die zweite Halterippe der Mehrzahl von Halterippen (210a-f) aufweist,
wobei die zweite Halterippe (210b) der Mehrzahl von Halterippen (210a-f) relativ zu der Öffnung (204) der ersten Halterippe (210a) der Mehrzahl von Halterippen (210a-f) unmittelbar nachgelagert ist, **dadurch gekennzeichnet, dass** wenigstens eine weitere Halterippe der Mehrzahl von Halterippen (210a-f) die gleiche Höhe wie die zweite Halterippe der Mehrzahl von Halterippen (210a-f) aufweist und relativ zu der Öffnung (204) der zweiten Halterippe der Mehrzahl von Halterippen (210a-f) nachgelagert ist.

2. Schlauchbefestigungssystem (200) nach Anspruch 1, wobei die Höhe der ersten Halterippe (210a) der Mehrzahl von Halterippen (210a-f) halb so groß wie die Höhe der zweiten Halterippe der Mehrzahl von Halterippen (210a-f) ist.

3. Schlauchbefestigungssystem (200) nach einem der vorhergehenden Ansprüche, wobei auf dem Schlauchstutzen (203) zwischen dem Halteabschnitt (209) und der Öffnung (204) ein vorderer Flachabschnitt (215) ausgebildet ist.

4. Schlauchbefestigungssystem (200) nach einem der vorhergehenden Ansprüche, wobei der Schlauchstutzen (203) axialsymmetrisch ausgebildet ist.

5. Schlauchbefestigungssystem (200) nach einem der vorhergehenden Ansprüche, wobei die Halterippen der Mehrzahl von Halterippen (210a-f) durch um den Schlauchstutzen (203) umlaufende, radial abstehende Wülste gebildet sind.

6. Schlauchbefestigungssystem (200) nach Anspruch 5, wobei die Mehrzahl von Halterippen (210a-f) aus 3, 4, 5, 6, 7, 8, 9 oder 10 Halterippen besteht.

7. Schlauchbefestigungssystem (200) nach einem der Ansprüche 1 bis 3, wobei die Halterippen der Mehrzahl von Halterippen (210a-f) durch eine um den Schlauchstutzen (203) umlaufende Gewindewulst gebildet sind.

8. Schlauchbefestigungssystem (200) nach einem der vorhergehenden Ansprüche, wobei der Schlauchstutzen (203) an der Öffnung (204) einen in Umfangsrichtung umlaufenden, radial abstehenden Vorsprung (213) umfasst.

9. Schlauchbefestigungssystem (200) nach einem der vorhergehenden Ansprüche, wobei der Schlauchstutzen (203) einen in Umfangsrichtung umlaufenden Ringanschlag (211) umfasst, der in axialer Richtung relativ zu der Öffnung (204) dem Halteabschnitt (209) nachgelagert ist und an dem der Schlauch (205) anliegt, wenn der Schlauch (205) auf dem Schlauchstutzen (203) aufgesetzt ist.

10. Schlauchbefestigungssystem (200) nach Anspruch 9, wobei auf dem Schlauchstutzen (203) zwischen dem Halteabschnitt (209) und dem Ringanschlag (211) ein hinterer Flachabschnitt (217) ausgebildet ist.

11. Schlauchbefestigungssystem (200) nach einem der vorhergehenden Ansprüche , wobei der Halteabschnitt (209) des Schlauchstutzens (203) relativ zu der Befestigungsschelle (207) in axialer Richtung derart dimensioniert ist, dass in axialer Richtung die erste Halterippe (210a) der Mehrzahl von Halterippen (210a-f) weiter entfernt von der Öffnung (204) angeordnet ist als das der Öffnung (204) zugewandte Ende der Befestigungsschelle (207).

12. Schlauchbefestigungssystem (200) nach einem der vorhergehenden Ansprüche, wobei der Schlauch (205) aus einem flexiblen Material besteht, so dass dann, wenn der Schlauch (205) an dem Schlauchstutzen (203) angebracht ist, sich das Material des Schlauches (205) in Vertiefungen (212a, b) zwischen zwei jeweils benachbarten Halterippen der Mehrzahl von Halterippen (210a-f) ausdehnt.

## Claims

1. Hose-fastening system (200) having a hose connector (203), having a hose (205), wherein the hose (205) can be positioned on the hose connector (203), and having a fastening clamp (207) for fastening the hose (205) on the hose connector (203), wherein the hose connector (203) comprises:
an opening (204); and
a retaining portion (209) for retaining the hose (205) on the hose connector (203), wherein the retaining portion (209) has a plurality of retaining ribs (210a-f), wherein a first retaining rib (210a) of the plurality of retaining ribs (210a-f) is arranged closer to the opening (204) than the rest of the retaining ribs (210b-f) of the plurality of retaining ribs (210a-f), which comprises a second retaining rib, and wherein the first retaining rib (210a) of the plurality of retaining ribs (210a-f) has a lower height than the second retaining rib of the plurality of retaining ribs (210a-f),
wherein the second retaining rib (210b) of the plurality of retaining ribs (210a-f) is arranged immediately downstream of the first retaining rib (210a) of the plurality of retaining ribs (210a-f), as seen relative to the opening (204), **characterized in that**
at least one further retaining rib of the plurality of retaining ribs (210a-f) has the same height as the second retaining rib of the plurality of retaining ribs (210a-f) and is arranged downstream of the second retaining rib of the plurality of retaining ribs (210a-f), as seen relative to the opening (204).

2. Hose-fastening system (200) according to Claim 1, wherein the height of the first retaining rib (210a) of the plurality of retaining ribs (210a-f) is half that of the second retaining rib of the plurality of retaining ribs (210a-f).

3. Hose-fastening system (200) according to either of the preceding claims, wherein a front flat portion (215) is formed on the hose connector (203), between the retaining portion (209) and the opening (204).

4. Hose-fastening system (200) according to one of the preceding claims, wherein the hose connector (203) is of axially symmetrical configuration.

5. Hose-fastening system (200) according to one of the preceding claims, wherein the retaining ribs of the plurality of retaining ribs (210a-f) are formed by radially projecting beads encircling the hose connector (203).

6. Hose-fastening system (200) according to Claim 5, wherein the plurality of retaining ribs (210a-f) is made up of 3, 4, 5, 6, 7, 8, 9 or 10 retaining ribs.

7. Hose-fastening system (200) according to one of Claims 1 to 3, wherein the retaining ribs of the plurality of retaining ribs (210a-f) are formed by a threaded bead encircling the hose connector (203).

8. Hose-fastening system (200) according to one of the preceding claims, wherein, at the opening (204), the hose connector (203) comprises a circumferentially encircling, radially projecting protrusion (213).

9. Hose-fastening system (200) according to one of the preceding claims, wherein the hose connector (203) comprises a circumferentially encircling annular stop (211), which is arranged downstream of the retaining portion (209), as seen in the axial direction relative to the opening (204), and against which the hose (205) butts when the hose (205) is positioned on the hose connector (203).

10. Hose-fastening system (200) according to Claim 9, wherein a rear flat portion (217) is formed on the hose connector (203), between the retaining portion (209) and the annular stop (211).

11. Hose-fastening system (200) according to one of the preceding claims, wherein the retaining portion (209) of the hose connector (203) is dimensioned in the axial direction relative to the fastening clamp (207) such that, as seen in the axial direction, the first retaining rib (210a) of the plurality of retaining ribs (210a-f) is arranged at a greater distance from the opening (204) than that end of the fastening clamp (207) which is directed towards the opening (204).

12. Hose-fastening system (200) according to one of the preceding claims, wherein the hose (205) consists of a flexible material, and so, when the hose (205) is fitted on the hose connector (203), the material of the hose (205) expands into depressions (212a, b) between two respectively adjacent retaining ribs of the plurality of retaining ribs (210a-f).

## Revendications

1. Système de fixation de tuyau (200) comprenant un raccord de tuyau (203), un tuyau (205), le tuyau (205) pouvant être posé sur le raccord de tuyau (203) et un collier de fixation (207) pour la fixation du tuyau (205) sur le raccord de tuyau (203), le raccord de tuyau (203) comprenant :
une ouverture (204) ; et
une portion de retenue (209) pour retenir le tuyau (205) sur le raccord de tuyau (203), la portion de retenue (209) présentant une pluralité de nervures de retenue (210a-f), une première nervure de retenue (210a) parmi la pluralité de nervures de retenue (210a-f) étant disposée plus près de l'ouverture (204) que les autres nervures de retenue (210b-f) de la pluralité de nervures de retenue (210a-f) qui comprennent une deuxième nervure de retenue, et la première nervure de retenue (210a) de la pluralité de nervures de retenue (210a-f) présentant une plus petite hauteur que la deuxième nervure de retenue de la pluralité de nervures de retenue (210a-f),
la deuxième nervure de retenue (210b) de la pluralité de nervures de retenue (210a-f) étant placée, par rapport à l'ouverture (204), directement après la première nervure de retenue (210a) de la pluralité de nervures de retenue(210a-f), **caractérisé en ce**
**qu'**au moins une nervure de retenue supplémentaire de la pluralité de nervures de retenue (210a-f) présente la même hauteur que la deuxième nervure de retenue de la pluralité de nervures de retenue (210a-f) et est placée, par rapport à l'ouverture (204), après la deuxième nervure de retenue de la pluralité de nervures de retenue (210a-f).

2. Système de fixation de tuyau (200) selon la revendication 1, dans lequel la hauteur de la première nervure de retenue (210a) de la pluralité de nervures de retenue (210a-f) est moitié moins grande que la hauteur de la deuxième nervure de retenue de la pluralité de nervures de retenue (210a-f).

3. Système de fixation de tuyau (200) selon l'une quelconque des revendications précédentes, dans lequel une portion plate avant (215) est réalisée sur le raccord de tuyau (203) entre la portion de retenue (209) et l'ouverture (204).

4. Système de fixation de tuyau (200) selon l'une quelconque des revendications précédentes, dans lequel le raccord de tuyau (203) est réalisé avec une symétrie axiale.

5. Système de fixation de tuyau (200) selon l'une quelconque des revendications précédentes, dans lequel les nervures de retenue de la pluralité de nervures de retenue (210a-f) sont formées par des bourrelets saillant radialement sur la périphérie autour du raccord de tuyau (203).

6. Système de fixation de tuyau (200) selon la revendication 5, dans lequel la pluralité de nervures de retenue (210a-f) se compose de 3, 4, 5, 6, 7, 8, 9 ou 10 nervures de retenue.

7. Système de fixation de tuyau (200) selon l'une quelconque des revendications 1 à 3, dans lequel les nervures de retenue de la pluralité de nervures de retenue (210a-f) sont formées par un bourrelet fileté sur la périphérie autour du raccord de tuyau (203).

8. Système de fixation de tuyau (200) selon l'une quelconque des revendications précédentes, dans lequel le raccord de tuyau (203) comprend, au niveau de l'ouverture (204), une saillie faisant saillie radialement (213) s'étendant sur le pourtour dans la direction périphérique.

9. Système de fixation de tuyau (200) selon l'une quelconque des revendications précédentes, dans lequel le raccord de tuyau (203) comprend une butée annulaire (211) s'étendant sur le pourtour dans la direction périphérique, qui est placée après la portion de retenue (209) dans la direction axiale par rapport à l'ouverture (204) et qui s'applique contre le tuyau (205) lorsque le tuyau (205) est posé sur le raccord de tuyau (203).

10. Système de fixation de tuyau (200) selon la revendication 9, dans lequel une portion plate arrière (217) est réalisée sur le raccord de tuyau (203) entre la portion de retenue (209) et la butée annulaire (211).

11. Système de fixation de tuyau (200) selon l'une quelconque des revendications précédentes, dans lequel la portion de retenue (209) du raccord de tuyau (203) est dimensionnée dans la direction axiale, par rapport au collier de fixation (207), de telle sorte que la première nervure de retenue (210a) de la pluralité de nervures de retenue (210a-f), dans la direction axiale, soit plus éloignée de l'ouverture (204) que l'extrémité du collier de fixation (207) tournée vers l'ouverture (204).

12. Système de fixation de tuyau (200) selon l'une quelconque des revendications précédentes, dans lequel le tuyau (205) se compose d'un matériau flexible de telle sorte que lorsque le tuyau (205) est monté sur le raccord de tuyau (203), le matériau du tuyau (205) s'étende dans des renfoncements (212a, b) entre deux nervures de retenue à chaque fois adjacentes de la pluralité de nervures de retenue (210a-f).
